# EUROPÄISCHE PATENTSCHRIFT

(11) **EP 3 475 543 B1**
(45) Veröffentlichungstag und Bekanntmachung des Hinweises auf die Patenterteilung: **05.08.2020**
(21) Anmeldenummer: 17731538.9
(22) Anmeldetag: 19.06.2017
(51) Int. Cl.: F01N 9/00, F01N 3/021, F01N 3/10, F01N 3/22

(54) **VERFAHREN UND VORRICHTUNG ZUR ABGASNACHBEHANDLUNG EINES VERBRENNUNGSMOTORS**
METHOD AND DEVICE FOR THE EXHAUST GAS AFTERTREATMENT OF AN INTERNAL COMBUSTION ENGINE
PROCÉDÉ ET DISPOSITIF DE POST-TRAITEMENT DE GAZ D'ÉCHAPPEMENT D'UN MOTEUR À COMBUSTION INTERNE

(30) Priorität: 23.06.2016 DE 102016211274
(43) Veröffentlichungstag der Anmeldung: 01.05.2019
(73) Patentinhaber: Volkswagen Aktiengesellschaft, 38440 Wolfsburg (DE)
(72) Erfinder: ZINK, Florian, 74906 Bad Rappenau (DE)
(86) Internationale Anmeldenummer: PCT/EP2017/064874
(87) Internationale Veröffentlichungsnummer: WO 2017/220460

(56) Entgegenhaltungen:
- DE-A1-102005 062 398
- DE-A1-102010 044 102
- DE-A1-102010 046 747
- DE-A1-102010 046 751
- DE-A1-102011 002 438
- DE-A1-102012 105 728

## Beschreibung

Die Erfindung betrifft ein Verfahren und eine Vorrichtung zur Abgasnachbehandlung eines Verbrennungsmotors.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der nächsten Gesetzgebungsstufe EU6 wird auch für Ottomotoren ein Grenzwert für eine Partikelanzahl vorgeschrieben. Dies kann dazu führen, dass bei einigen Modellen der Einsatz eines Ottopartikelfilters nötig sein kann. Im Fahrbetrieb wird ein solcher Ottopartikelfilter mit Ruß beladen. Damit der Abgasgegendruck nicht zu stark ansteigt, muss dieser Ottopartikelfilter kontinuierlich oder periodisch regeneriert werden. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Dadurch kann der in dem Partikelfilter eingelagerte Ruß oxidiert werden. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Der Eintrag von Sauerstoff in den Abgaskanal erfolgt in der Regel über Schubphasen des Verbrennungsmotors, in denen kein Kraftstoff in die Brennräume eingespritzt wird. Alternativ dazu kommen als Maßnahmen beispielsweise eine zeitweise Magerverstellung des Ottomotors oder das Einblasen von Sekundärluft in die Abgasanlage infrage. Bevorzugt wird bislang eine Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Zur Überwachung und Steuerung der Regeneration ist zudem eine aufwendige Sensorik notwendig. Nachteilig an einer solchen Magerverstellung ist jedoch, dass gerade bei niedrigem Teillastbetrieb und bei Kurzstreckenfahrten nicht die zur Regeneration des Partikelfilters notwendige Regenerationstemperatur erreicht wird. Zudem können während der Magerverstellung des Motors Stickoxide nicht hinreichend durch den Drei-Wege-Katalysator konvertiert werden, da kein Reduktionsmittel für die Stickoxide vorliegt.

Aus der DE 10 2010 044 102 A1 ist ein Verfahren zur Abgasnachbehandlung eines Verbrennungsmotors bekannt, bei dem der Verbrennungsmotor während der Regeneration des Partikelfilters mit einer stöchiometrischen Verbrennungsluft betrieben wird und zur Regeneration des Partikelfilters Sekundärluft in den Abgaskanal eingeblasen wird. Dabei wird die Sekundärluftmenge über ein passives Flatterventil in den Abgaskanal eingebracht, sodass eine quantitative Regelung der Sekundärluftmenge nicht möglich ist.

Aus der DE 10 2011 002 438 A1 ist ein Verfahren zur Bestimmung der Beladung eines Partikelfilters im Abgaskanal eines Verbrennungsmotors bekannt, wobei in Betriebszuständen des Verbrennungsmotors mit geringen Abgasvolumina stromaufwärts des Partikelfilters Sekundärluft in den Abgaskanal eingebracht wird, um den Volumenstrom zu vergrößern und somit das Ergebnis einer Differenzdruckmessung zu verbessern, aus welcher ein Beladungszustand des Partikelfilters berechnet wird.

Aus der DE 10 2013 220 899 A1 ist ein Verfahren zur Regeneration eines Partikelfilters im Abgaskanal eines Verbrennungsmotors bekannt, wobei das Aufheizen des Partikelfilters durch motorische Maßnahmen des Verbrennungsmotors erfolgt und wobei der Partikelfilter durch den Restsauerstoff eines mageren Verbrennungsgemischs des Verbrennungsmotors mit dem für die Oxidation der darin zurückgehaltenen Rußpartikel versorgt wird, wobei die Regelung der Restsauerstoffmenge zur Oxidation des Rußes auf dem Partikelfilter durch die Lambdaregelung des Verbrennungsmotors erfolgt.

Die DE 10 2010 046 747 A1 offenbart ein Verfahren zur Abgasnachbehandlung eines Verbrennungsmotors mit einem Abgaskanal sowie einem im Abgaskanal angeordneten Drei-Wege-Katalysator, einem stromabwärts des Drei-Wege-Katalysators angeordneten Partikelfilter, sowie einer Sekundärluftversorgung. Dabei wird der Verbrennungsmotor mit einem stöchiometrischen Verbrennungsluftverhältnis betrieben und gleichzeitig Sekundärluft in den Abgaskanal eingeblasen, um den zur Oxidation des im Partikelfilters zurückgehaltenen Rußes notwendigen Sauerstoff zur Verfügung zu stellen.

Aus der DE 10 2005 062 398 A1 ist ein Verfahren zur Abgasnachbehandlung eines Verbrennungsmotors bekannt, wobei in der Abgasanlage ein Partikelfilter mit einer katalytisch wirksamen Beschichtung angeordnet ist, wobei stromaufwärts des Partikelfilters Sekundärluft in die Abgasanlage eingebracht werden kann.

Aus der DE 10 2012 105 728 A1 ist ein Verfahren zur Regeneration eines Partikelfilters in einer Abgasanlage eines Verbrennungsmotors bekannt, wobei der Partikelfilter in der Abgasanlage stromabwärts eines Drei-Wege-Katalysators angeordnet ist. Dabei wird ein Zylinder des Verbrennungsmotors im ungefeuerten Betrieb betrieben, um den zur Oxidation des im Partikelfilters notwendigen Sauerstoff bereitzustellen.

Die DE 10 2010 046 751 A1 offenbart ein Verfahren zum Regenerieren eines Partikelfilters in der Abgasanlage eines Verbrennungsmotors. Dabei wird vom der Verdichter eines Abgasturbolader Frischluft verdichtet und in die Abgasanlage stromaufwärts des Partikelfilters eingeleitet. Der Sauerstoff kann zum Teil durch Anpassen von Ladedruck als Reaktion auf einen Zustand von Partikelfilterregeneration geregelt werden. Ferner können die Stickoxid-Rohemissionen des Verbrennungsmotors durch eine Anpassung der Abgasrückführungsrate gesteuert werden.

Der Erfindung liegt nun die Aufgabe zugrunde, ein Verfahren und eine Vorrichtung bereitzustellen, mit denen sowohl ein hinreichend hohes Temperaturniveau für eine Regeneration des Partikelfilters erreicht wird, als auch während der Regeneration des Partikelfilters der Schadstoffausstoß möglichst gering gehalten wird, sodass die Regeneration des Partikelfilters im Wesentlichen emissionsneutral erfolgen kann.

Die Aufgabe wird durch ein Verfahren zur Abgasnachbehandlung eines Verbrennungsmotors mit einem Abgaskanal sowie einem im Abgaskanal angeordneten Drei-Wege-Katalysator und einem stromabwärts des Drei-Wege-Katalysators angeordneten Partikelfilter gelöst, welches folgende Schritte umfasst:
- Betreiben des Verbrennungsmotors mit einem stöchiometrischen Verbrennungsluftverhältnis, wobei die bei der Verbrennung entstehenden Rußpartikel in dem Partikelfilter zurückgehalten werden,
- Ermittlung eines Beladungszustandes des Partikelfilters,
- Einleiten einer Regeneration des Partikelfilters, wenn bei der Ermittlung des Beladungszustandes die Notwendigkeit einer Regeneration des Partikelfilters erkannt wird,
- Anheben der Abgastemperatur durch einen Betrieb des Verbrennungsmotors mit einem unterstöchiometrischen, fetten Verbrennungsluftverhältnis und gleichzeitiger Einbringung von Sekundärluft in den Abgaskanal stromaufwärts des Partikelfilters, wobei die unverbrannten Kraftstoffkomponenten exotherm im Abgaskanal oder auf dem Partikelfilter mit der Sekundärluft umgesetzt werden,
- Regeneration des Partikelfilters, wobei der Verbrennungsmotor mit einem stöchiometrischen Verbrennungsluftverhältnis betrieben wird und Sekundärluft in den Abgaskanal eingebracht wird, wobei
- die Menge der in den Abgaskanal eingebrachten Sekundärluft über eine Lambdasonde stromabwärts einer Einleitstelle für die Sekundärluft und stromaufwärts des Partikelfilters geregelt wird.

Durch das erfindungsgemäße Verfahren kann der Partikelfilter auch bei niedriger Teillast oder im Kurzstreckenbetrieb auf eine Regenerationstemperatur aufgeheizt werden und darauffolgend regeneriert werden. Dabei kann durch die Lambdaregelung verhindert werden, dass zu viel Sauerstoff in den Abgaskanal gelangt und es so zu einem unkontrollierten Abbrand des Rußes und einer damit verbundenen thermischen Schädigung des Partikelfilters kommen kann. Die Nutzung der Lambdasonde anstelle von Druck- und/oder Temperatursensoren hat den Vorteil, dass direkt die Gemischgüte stromaufwärts des Partikelfilters im Abgaskanal bewertet werden kann.

Durch die in den abhängigen Ansprüchen aufgeführten Maßnahmen sind vorteilhafte Weiterbildungen und Verbesserungen des im unabhängigen Anspruch angegebenen Verfahrens zur Regeneration des Partikelfilters möglich.

In bevorzugter Ausgestaltung der Erfindung ist vorgesehen, dass in der Heizphase durch die Sekundärlufteinbringung ein stöchiometrisches Mischungsluftverhältnis im Abgaskanal stromabwärts des Drei-Wege-Katalysators und stromaufwärts des Partikelfilters eingestellt wird. Dadurch kann die Sekundärluftmenge derart angepasst werden, dass während der Heizphase des Partikelfilters die unverbrannten Kraftstoffkomponenten vollständig im Abgaskanal und/oder auf dem Partikelfilter mit dem Sauerstoff aus der Sekundärluftversorgung umgesetzt werden, sodass es auch während der Heizphase nicht zu einem Abstieg der Emissionen an Kohlenmonoxid (CO) und unverbrannten Kohlenwasserstoffen (HC) kommt.

In einer bevorzugten Ausführungsform des Verfahrens ist vorgesehen, dass eine Temperatur des Partikelfilters ermittelt wird und in der Regenerationsphase die Temperatur oberhalb der Regenerationstemperatur des Partikelfilters gehalten wird. Dadurch kann der Partikelfilter in einem kontinuierlichen Prozess regeneriert werden, bis die komplette Rußbeladung des Partikelfilters oxidiert ist. Dadurch wird eine Restbeladung des Partikelfilters vermieden, welche zu häufigeren Regenerationszyklen und damit verbunden zu einem Mehrverbrauch des Verbrennungsmotors führt.

In weiterer bevorzugter Ausgestaltung der Erfindung ist vorgesehen, dass bei Erreichen einer oberen Schwellentemperatur des Partikelfilters die Einbringung von Sekundärluft gestoppt wird. Durch einen Stopp der Sekundärlufteinbringung wird die exotherme Oxidation der im Partikelfilter zurückgehaltenen Rußpartikel gestoppt, sodass eine weitere Erwärmung des Partikelfilters vermieden werden kann. Somit kann die Lambdaregelung der Sekundärluft wirksam zum Bauteilschutz des Partikelfilters beitragen.

Besonders bevorzugt ist dabei, wenn die in den Abgaskanal eindosierte Sekundärluftmenge in Abhängigkeit einer Temperaturänderung des Partikelfilters erhöht oder reduziert wird. Dabei wird die Sekundärluftmenge bei einem Anstieg der Partikelfiltertemperatur während der Regeneration des Partikelfilters so weit gedrosselt, bis der Temperaturanstieg beendet ist. Bei einem Abfallen der Partikelfiltertemperatur wird die Sekundärluftmenge während der Regeneration erhöht, um den Rußumsatz durch Oxidation auf dem Partikelfilter zu erhöhen und durch diese exotherme Reaktion die Temperatur des Partikelfilters zu stabilisieren oder zu erhöhen, damit die Temperatur des Partikelfilters während der Regeneration nicht unter die Regenerationstemperatur absinkt und keine weiteren Rußpartikel oxidiert werden können.

Alternativ oder zusätzlich ist vorgesehen, dass die in den Abgaskanal eingebrachte Sekundärluftmenge mit zunehmender Regeneration des Partikelfilters und abnehmendem Beladungsgrad des Partikelfilters erhöht wird. Gerade bei stark beladenen Partikelfiltern und hohen Abgastemperaturen besteht die Gefahr, dass eine zu große Sauerstoffkonzentration im Abgaskanal zu einem unkontrollierten Rußabbrand auf dem Partikelfilter und einer damit verbundenen thermischen Schädigung des Partikelfilters führt. Je geringer die Beladung des Partikelfilters, desto geringer die weitere Oxidation von in dem Partikelfilter zurückgehaltenen Rußpartikeln. Damit die Reaktionsgeschwindigkeit zu Ende des Regenerationsvorgangs nicht zu stark abnimmt und die Temperatur am Partikelfilter unter die Regenerationstemperatur fällt, kann die Sauerstoffmenge durch zusätzliche Sekundärluft im Laufe der Regeneration erhöht werden.

Alternativ ist mit Vorteil vorgesehen, dass zur Regeneration des Partikelfilters mehrfach zwischen der Heizphase und der Regenerationsphase alternierend gewechselt wird. Somit kann sichergestellt werden, dass es einerseits während der Regeneration des Partikelfilters nicht zu einer Überhitzung und Schädigung des Bauteils kommt und der Regenerationsprozess nach Absinken der Temperatur unter die Regenerationstemperatur sooft wieder gestartet wird, bis eine vollständig Regeneration des Partikelfilters erreicht ist.

Gemäß einer Verbesserung des Verfahrens ist vorgesehen, dass die Temperatur während der Regeneration des Partikelfilters in einem Temperaturfenster zwischen der Regenerationstemperatur und einer oberen Schwellentemperatur gehalten wird. In diesem Temperaturfenster ist eine effiziente und schnelle Oxidation von im Partikelfilter zurückgehaltenen Rußpartikeln möglich, wobei die thermische Dauerhaltbarkeit des Partikelfilters nicht herabgesetzt wird und somit die Lebenszeit des Partikelfilters verkürzt wird.

Besonders vorteilhaft ist dabei, wenn das Temperaturfenster in einem Bereich von 600°C bis 750°C liegt. Temperaturen oberhalb von 600°C haben sich bei bestehenden Partikelfiltern als effizient für die Oxidation der Rußpartikel herausgestellt. Dabei halten diese Partikelfilter Temperaturen von bis zu 750°C dauerhaft aus, ohne dass es zu einer Schädigung des Partikelfilters kommt.

Gemäß einer weiteren Verbesserung des Verfahrens ist vorgesehen, dass die Sekundärluftmenge derart eingeregelt wird, dass sich während der Regeneration des Partikelfilters ein Mischungsluftverhältnis stromauf des Partikelfilters von λ_{M} von 1,05 bis 1,4 einstellt. Somit ist eine Oxidation des im Partikelfilter zurückgehaltenen Rußes ohne einen unkontrollierten Rußabbrand möglich. Besonders vorteilhaft ist ein Bereich von 1,1 < λ_{M} < 1,25, da in diesem Bereich hinreichend große Umsatzraten bei der Rußoxidation erreicht werden, um eine schnelle Regeneration des Partikelfilters zu gewährleisten.

In einer bevorzugten Weiterentwicklung des Verfahrens ist vorgesehen, dass die Sekundärluftmenge derart eingeregelt wird, dass sich stromab des Partikelfilters ein stöchiometrisches Abgas einstellt. Dabei wird durch die Sekundärlufteinbringung so viel Sauerstoff zur Verfügung gestellt, wie für eine stöchiometrische Oxidation der Rußpartikel notwendig ist. Somit kann die Oxidation der Rußpartikel im Wesentlichen emissionsneutral durchgeführt werden und es entstehen keine zusätzlichen, schädlichen Sekundäremissionen durch die Regeneration des Partikelfilters.

Gemäß einer vorteilhaften Ausführungsform des Verfahrens ist vorgesehen, dass die Heizphase erst dann beendet wird, wenn der Partikelfilter eine Temperatur erreicht, welche mindestens 30°, vorzugsweise mindestens 50° oberhalb der Regenerationstemperatur des Partikelfilters liegt. Somit ist gewährleistet, dass auch bei einer anfänglich geringen exothermen Oxidation der Rußpartikel die Temperatur des Partikelfilters nicht sofort wieder unter die Regenerationstemperatur abfällt und die Regeneration somit zum Stillstand kommt.

Gemäß einer bevorzugten Ausführungsform ist vorgesehen, dass an der Sekundärluftleitung eine Sekundärluftpumpe angeordnet ist. Durch die Sekundärluftpumpe kann auch bei niedriger Motorlast ein hinreichend großes Druckgefälle erzeugt werden, um Luft gegen den Abgasgegendruck in den Abgaskanal zu fördern. Alternativ kann bei Verbrennungsmotoren mit einem elektrisch angetriebenen Verdichter die Sekundärluft auch aus der Ansaugleitung stromab des Verdichters entnommen und in den Abgaskanal eingeleitet werden. Somit kann bei elektrisch aufgeladenen Motoren auf einen zusätzlichen Druckerzeuger, beispielsweise eine Sekundärluftpumpe, verzichtet werden und die Sekundärluft aus dem Ansaugtrakt des Verbrennungsmotors entnommen werden.

Erfindungsgemäß wird eine Vorrichtung zur Abgasnachbehandlung eines Verbrennungsmotors mit einem Abgaskanal, einem im Abgaskanal angeordneten Drei-Wege-Katalysator, einem im Abgaskanal stromabwärts des Drei-Wege-Katalysators angeordneten Partikelfilter, sowie mit einer Sekundärluftversorgung vorgeschlagen, wobei zwischen dem Drei-Wege-Katalysator und dem Partikelfilter eine Einleitstelle für die Sekundärluft aus der Sekundärluftversorgung vorgesehen ist, sowie mit einer ersten Lambdasonde, welche stromaufwärts des Drei-Wege-Katalysators angeordnet ist und einer zweiten Lambdasonde, welche stromabwärts der Einleitstelle und stromaufwärts des Partikelfilters angeordnet ist, wobei die Vorrichtung eingerichtet ist, um ein erfindungsgemäßes Verfahren durchzuführen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einem Drei-Wege-Katalysator sowie mit einem stromabwärts des Drei-Wege-Katalysators angeordneten Partikelfilter sowie einer Sekundärluftversorgung zur Durchführung eines erfindungsgemäßen Verfahrens,
- Figur 2: den Abgaskanal eines Verbrennungsmotors sowie die Lambdasensorik zur Steuerung eines erfindungsgemäßen Verfahrens, und
- Figur 3: ein Ablaufdiagramm eines erfindungsgemäßen Verfahrens zur Regeneration des Partikelfilters.

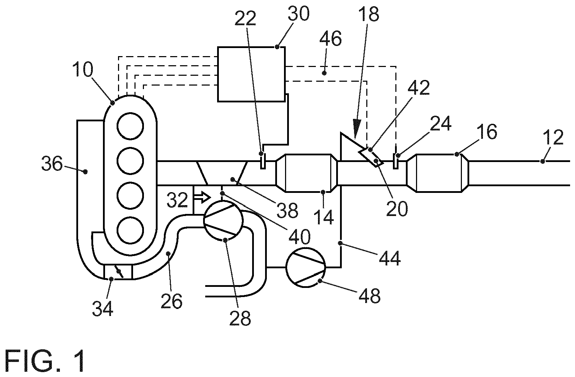

Figur 1 zeigt einen Verbrennungsmotor 10 in Form eines mit einem Turbolader 32 aufgeladenen Ottomotors, mit einem Ansaugkanal 26 und mit einem Abgaskanal 12. In dem Ansaugkanal 12 sind ein Verdichter 28, eine Drosselklappe 34 und ein Ladeluftkühler 36 angeordnet. In dem Abgaskanal 12 ist in Strömungsrichtung eines Abgases der Brennkraftmaschine 10 eine Turbine 38 des Turboladers 32 angeordnet, welche über eine Antriebswelle 40 den Verdichter 28 des Turboladers 32 antreibt. Alternativ kann der Verdichter 28 auch als mechanisch angetriebener Kompressor oder als elektrischer Verdichter ausgebildet sein.

In Strömungsrichtung eines Abgases der Brennkraftmaschine 10 durch den Abgaskanal 12 ist stromab der Turbine 38 ein Drei-Wege-Katalysator 14 in dem Abgaskanal 12 angeordnet. Dabei ist der Drei-Wege-Katalysator 14 vorzugsweise motornah angeordnet, um ein schnelles Aufheizen des Drei-Wege-Katalysators 14 auf eine Light-Off-Temperatur und somit eine effiziente Konvertierung von Schadstoffen zu ermöglichen. Unter einer motornahen Anordnung wird dabei eine Anordnung mit einem mittleren Abgaslaufweg von höchstens 50 cm, insbesondere von höchstens 30 cm, nach dem Auslass des Verbrennungsmotors 10 verstanden. Stromabwärts des Drei-Wege-Katalysators 14 ist eine Einleitstelle 20 zur Sekundärlufteinbringung in den Abgaskanal 12 vorgesehen. An der Einleitstelle 20 ist eine Sekundärluftversorgung 18 angeschlossen, welche ein Sekundärluftventil 42 und eine Sekundärluftleitung 44 umfasst, wobei die Sekundärluftleitung 44 einen Abschnitt des Ansaugkanals 26 stromaufwärts des Verdichters 28 mit dem Abgaskanal 12 verbindet. Dabei ist an der Sekundärluftleitung 44 eine Sekundärluftpumpe 48 vorgesehen, mit der ein gegenüber dem Druck im Abgaskanal 12 erhöhter Druck erzeugt werden kann. Alternativ kann die Sekundärluftleitung 44 auch die Umgebung mit dem Abgaskanal 12 verbinden. Dabei mündet die Sekundärluftleitung 44 am Sekundärluftventil 42 beziehungsweise der Einleitstelle 20 stromabwärts des Drei-Wege-Katalysators 14 und stromaufwärts eines Partikelfilters 16 in den Abgaskanal 12. In Strömungsrichtung des Abgases der Brennkraftmaschine 10 durch den Abgaskanal 12 ist stromaufwärts des Drei-Wege-Katalysators 14 eine erste Lambdasonde 22 vorgesehen, mit der das Verbrennungsluftverhältnis λ_{E} des Verbrennungsmotors 10 geregelt wird. Stromabwärts der Einleitstelle 20 und stromaufwärts des Partikelfilters 16 ist eine zweite Lambdasonde 24 vorgesehen, mit welcher die in den Abgaskanal 12 eingebrachte Sekundärluftmenge durch das Sekundärluftventil 42 gesteuert werden kann. Dabei sind die erste Lambdasonde 22, die zweite Lambdasonde 24 sowie das Sekundärluftventil 42 über Signalleitungen 46 mit einem Steuergerät 30 des Verbrennungsmotors 10 verbunden, um eine Regelung der in den Abgaskanal 12 eingeblasenen Sekundärluftmenge zu ermöglichen.

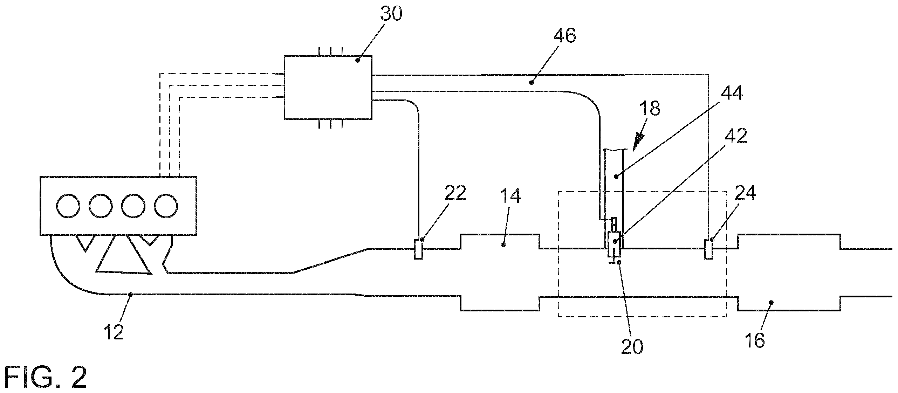

In Figur 2 ist der Verbrennungsmotor 10 mit dem Abgaskanal 12 noch einmal vereinfacht dargestellt. Im Abgaskanal 12 ist stromabwärts des Verbrennungsmotors 10 und stromaufwärts des Drei-Wege-Katalysators 14 eine erste Lambdasonde 22 zur Steuerung des Verbrennungsluftverhältnisses im Verbrennungsmotor 10 angeordnet. Stromabwärts des Drei-Wege-Katalysators befindet sich ein Regelkreis für die Sekundärlufteinbringung in den Abgaskanal 12, wobei der Regelkreis zumindest eine Sekundärluftversorgung 18 und einen stromabwärts der Einleitstelle 20 der Sekundärluftversorgung 18 und stromauf eines Partikelfilters 16 angeordnete zweite Lambdasonde 24 umfasst.

Im Betrieb der Brennkraftmaschine entstehender Ruß wird durch den Partikelfilter 16 zurückgehalten, wobei sich der Partikelfilter 16 mit den Rußpartikeln des Verbrennungsmotors 10 belädt. Wird eine festgelegte Schwelle der Rußbeladung des Partikelfilters 16 detektiert, was beispielsweise durch eine Differenzdruckmessung vor und nach dem Partikelfilter 16 oder durch eine modellbasierte Berechnung erfolgen kann, wird ein Regenerationsverfahren des Partikelfilters 16 eingeleitet. Dazu wird zunächst die Abgastemperatur des Verbrennungsmotors 10 bis zu einer Regenerationstemperatur T_{R} von mindestens 600°C vor Eintritt in den Partikelfilter 16 erhöht. Bevorzugt weist der Partikelfilter 16 eine katalytische Beschichtung auf, um unverbrannte Kohlenwasserstoffe, Kohlenmonoxid und/oder Wasserstoff exotherm auf der Oberfläche des Partikelfilters 16 zu oxidieren. Zunächst wird überprüft, ob der Partikelfilter 16 eine sogenannte "Light-Off-Temperatur" von beispielsweise ca. 350°C aufweist. Hierdurch ist sichergestellt, dass unverbrannte Bestandteile des Kraftstoffs aus dem Abgas der Brennkraftmaschine 10 auf dem Partikelfilter 16 exotherm oxidiert werden können. Liegt die Light-Off-Temperatur des Partikelfilters 16 vor, wird der Partikelfilter 16 mindestens bis zu der Regenerationstemperatur T_{R} weiter aufgeheizt. Dazu wird die Brennkraftmaschine 10 mit einem fetten Gemisch betrieben, welches vorzugsweise ein Verbrennungsluftverhältnis λ_{E} von etwa 0,9 aufweist. Die unverbrannten Bestandteile des Gemischs, insbesondere Kohlenmonoxid, Kohlenwasserstoffe und Wasserstoff, werden zusammen mit den Verbrennungsprodukten in die Abgasanlage 12 eingeleitet. Durch einen Luftabgriff in dem Ansaugkanal 26 stromabwärts des Verdichters 28 und ein Einleiten dieser Luft über die Sekundärluftleitung 44 und das Sekundärluftventil 42 in den Abgaskanal 12, können diese unverbrannten Bestandteile des Kraftstoffs auf dem stromabliegenden Partikelfilter 16 exotherm umgesetzt werden. Durch die externe Luftzufuhr über die Sekundärluftversorgung 18 und den fetten Motorbetrieb können große Mengen an Abgasenthalpie in den Partikelfilter 16 eingebracht werden. Zur Überwachung beziehungsweise Regelung dieser Abgasenthalpie ist eine aufwendige Sensorik notwendig, welche einen Drucksensor, einen Temperatursensor sowie die zweite Lambdasonde 24 umfasst. Das Verbrennungsluftverhältnis λ_{E} der Brennkraftmaschine 10 kann vorgesteuert so eingestellt werden, dass sich die gewünschte Zieltemperatur einstellt. Gleichzeitig wird das Mischungsluftverhältnis λₘ aus Verbrennungsluftverhältnis der Brennkraftmaschine 10 und der eingebrachten Sekundärluft durch die zweite Lambdasonde 24 stromabwärts der Einleitstelle 20 und stromaufwärts des Partikelfilters 16 gemessen. Während der Heizphase des Partikelfilters 16 wird dieses Mischungsluftverhältnis auf λₘ = 1 eingeregelt, sodass die Emissionen auf der katalytischen Beschichtung des Partikelfilters 16 umgesetzt werden können und der Partikelfilter seine optimale Abgasreinigungswirkung erreichen kann.

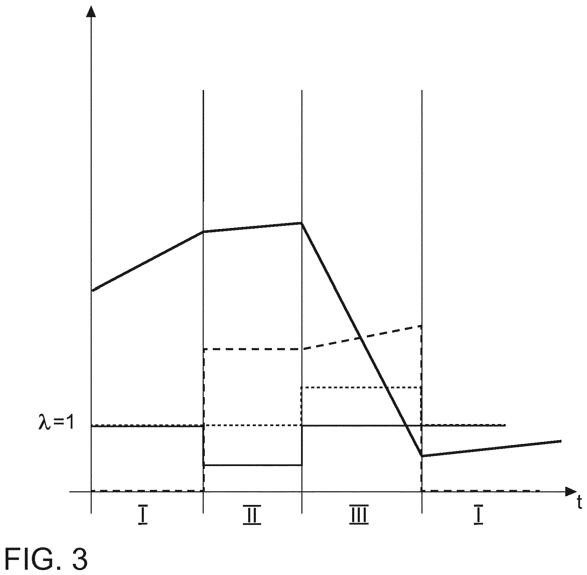

Ist die Heizphase abgeschlossen und eine Temperatur oberhalb der Regenerationstemperatur T_{R} des Partikelfilters 18 erreicht, wird auf eine Regenerationsphase umgestellt. Dazu wird die Brennkraftmaschine 10 wieder mit stöchiometrischem Verbrennungsluftverhältnis λ_{E} = 1 betrieben. Dadurch können alle Schadstoffe des Abgases der Brennkraftmaschine 10 während der Regenerationsphase auf dem Drei-Wege-Katalysator 14 vollständig umgesetzt werden. Um den Sauerstoff für die Regeneration des Partikelfilters 16 bereitzustellen, wird weiterhin Sekundärluft in den Abgaskanal 12 eingeblasen. Das gewünschte Mischungsluftverhältnis, beispielsweise λₘ = 1,1 kann durch entsprechende Regelung der Sekundärluft durch das Sekundärluftventil 42 eingestellt werden. Dadurch wird beispielsweise gewährleistet, dass die Umsatzrate des im Partikelfilter 16 zurückgehaltenen Rußes nicht zu hoch wird, was andernfalls zu einer thermischen Schädigung des Partikelfilters 16 führen könnte. Sinkt die Temperatur am Eintritt in den Partikelfilter 16 während der Regeneration ab, so wird die Menge an Sekundärluft erhöht, um die Umsatzraten des auf dem Partikelfilter zurückgehaltenen Rußes zu erhöhen und somit die Abgastemperatur T_{EG} zu steigern. Eine solche erfindungsgemäße Regeneration des Partikelfilters 16 ist in Figur 3 dargestellt. Die Regeneration des Partikelfilters 16 wird so lange aufrechterhalten, bis der Partikelfilter 16 vollständig regeneriert ist, was über eine Differenzdruckmessung oder ebenfalls über ein Berechnungsmodell zum Rußeintrag und Rußaustrag ermittelt werden kann. Nach vollständiger Regeneration des Partikelfilters 16 wird die Sekundärluftversorgung 18 in einer erneuten Beladungsphase des Partikelfilters 16 abgeschaltet und der Motor sowie das gesamte Abgassystem wieder mit einem stöchiometrischen Verbrennungsluftgemisch λ_{E} = 1 beaufschlagt.

In einer ersten Phase I wird der Verbrennungsmotor 10 mit einem stöchiometrischen Verbrennungsluftverhältnis λ_{E} = 1 betrieben und die Rußpartikel in dem Partikelfilter 16 zurückgehalten. Dabei ist die Sekundärluftversorgung 18 abgeschaltet und es wird kein weiterer Sauerstoff in den Abgaskanal 12 des Verbrennungsmotors 10 eingebracht. In einer zweiten Phase II, welche auch als Heizphase bezeichnet wird, wird die externe Luftzufuhr durch die Sekundärluftversorgung 18 aktiviert und der Verbrennungsmotor 10 mit einem unterstöchiometrischen, fetten Verbrennungsluftverhältnis λ_{E} < 1 betrieben, sodass sich stromabwärts der Einleitstelle 20 ein stöchiometrisches Mischungsluftverhältnis λ_{M} = 1 einstellt.

In einer dritten Phase III, welche auch als Regenerationsphase bezeichnet wird, wird der Verbrennungsmotor 10 mit einem stöchiometrischen Verbrennungsluftverhältnis λ_{E} = 1 betrieben und die Sekundärlufteinbringung kontinuierlich erhöht, bis der Partikelfilter 16 vollständig regeneriert ist. Dabei stellt sich im Abgaskanal 12 stromabwärts der Einleitstelle 20 eine überstöchiometrisches, mageres Mischungsluftverhältnis λ_{M} > 1 ein. Ist der Partikelfilter 16 vollständig regeneriert, wird die Sekundärluftversorgung 18 wieder abgeschaltet und der Verbrennungsmotor 10 in einer erneuten Beladungsphase I wieder mit einem stöchiometrischen Verbrennungsluftverhältnis λ_{E} = 1 betrieben. Das Verbrennungsluftverhältnis λ_{E} ist in Fig 3 mit einer durchgezogenen Linie dargestellt, das Mischungsluftverhältnis λ_{M} stromabwärts der Einleitstelle 20 mit einer gepunkteten Linie und die eingebrachte Sekundärluft durch Sekundärluftversorgung 18 mit einer gestrichelten Linie.

### Bezugszeichenliste

- 10: Verbrennungsmotor
- 12: Abgaskanal
- 14: Drei-Wege-Katalysator
- 16: Partikelfilter
- 18: Sekundärluftversorgung
- 20: Einleitstelle
- 22: erste Lambdasonde
- 24: zweite Lambdasonde
- 26: Ansaugkanal
- 28: Verdichter
- 30: Steuergerät
- 32: Turbolader
- 34: Drosselklappe
- 36: Ladeluftkühler
- 38: Turbine
- 40: Antriebswelle
- 42: Sekundärluftventil
- 44: Sekundärluftleitung
- 46: Signalleitung
- 48: Sekundärluftpumpe
- λ_{E}: Verbrennungsluftverhältnis des Verbrennungsmotors
- λ_{M}: Mischungsluftverhältnis im Abgaskanal stromabwärts der Sekundärlufteinbringung
- T_{EG}: Abgastemperatur
- T_{PF}: Temperatur des Partikelfilters
- T_{R}: Regenerationstemperatur des Partikelfilters
- T_{SO}: obere Schwellentemperatur
- ΔT_{PF}: Temperaturänderung des Partikelfilters während der Regeneration

## Patentansprüche

1. Verfahren zur Abgasnachbehandlung eines Verbrennungsmotors (10) mit einem Abgaskanal (12) sowie einem im Abgaskanal (12) angeordneten Drei-Wege-Katalysator (14), einem stromabwärts des Drei-Wege-Katalysators (14) angeordneten Partikelfilter (16), sowie einer Sekundärluftversorgung (18), welches folgende Schritte umfasst:
∘ Betreiben des Verbrennungsmotors (10) mit einem stöchiometrischen Verbrennungsluftverhältnis (λ_{E} = 1), wobei die bei der Verbrennung entstehenden Rußpartikel in dem Partikelfilter (16) zurückgehalten werden,
∘ Ermitteln eines Beladungszustandes des Partikelfilters (16),
∘ Einleiten einer Regeneration des Partikelfilters (16), wenn beim Ermitteln des Beladungszustandes die Notwendigkeit einer Regeneration des Partikelfilters (16) erkannt wird,
∘ Anheben der Abgastemperatur (T_{EG}) in einer Heizphase durch einen Betrieb des Verbrennungsmotors (10) mit einem unterstöchiometrischen, fetten Verbrennungsluftverhältnis (λ_{E} < 1) und gleichzeitigem Einbringen von Sekundärluft in den Abgaskanal (12) stromaufwärts des Partikelfilters (16), wobei die unverbrannten Kraftstoffkomponenten exotherm im Abgaskanal (12) oder auf dem Partikelfilter (16) mit der Sekundärluft umgesetzt werden, bis eine Regenerationstemperatur (T_{R}) erreicht ist;
∘ Regeneration des Partikelfilters (16), wobei der Verbrennungsmotor (10) mit einem stöchiometrischen Verbrennungsluftverhältnis (λ_{E} = 1) betrieben wird und Sekundärluft in den Abgaskanal (12) eingebracht wird, sodass sich stromab der Sekundärlufteinleitung ein überstöchiometrisches Abgas (λ_{M} > 1) einstellt, wobei
∘ die Menge der in den Abgaskanal (12) eingebrachten Sekundärluft über eine Lambdasonde (24) stromabwärts einer Einleitstelle (20) für die Sekundärluft und stromaufwärts des Partikelfilters (16) geregelt wird.

2. Verfahren nach Anspruch 1, **dadurch gekennzeichnet, dass** in der Heizphase durch die Sekundärlufteinbringung ein stöchiometrisches Mischungsluftverhältnis (λ_{M} = 1) im Abgaskanal (12) stromabwärts des Drei-Wege-Katalysators (14) und stromaufwärts des Partikelfilters (16) eingestellt wird.

3. Verfahren nach Anspruch 1 oder 2, **dadurch gekennzeichnet, dass** eine Temperatur (T_{PF}) des Partikelfilters (16) ermittelt wird und in der Regenerationsphase die Temperatur (T_{PF}) oberhalb der Regenerationstemperatur (T_{R}) des Partikelfilters (16) gehalten wird.

4. Verfahren nach einem der Ansprüche 1 bis 3, **dadurch gekennzeichnet, dass** bei Erreichen einen oberen Schwellentemperatur (T_{SO}) das Einbringen von Sekundärluft gestoppt wird.

5. Verfahren nach Anspruch 3 oder 4, **dadurch gekennzeichnet, dass** die in den Abgaskanal (12) eindosierte Sekundärluftmenge in Abhängigkeit einer Temperaturänderung (ΔT_{PF}) des Partikelfilters (16) erhöht oder reduziert wird.

6. Verfahren nach einem der Ansprüche 1 bis 5, **dadurch gekennzeichnet, dass** die in den Abgaskanal (12) eindosierte Sekundärluftmenge mit zunehmender Regeneration des Partikelfilters (16) erhöht wird.

7. Verfahren nach einem der Ansprüche 1 bis 6, **dadurch gekennzeichnet, dass** zur Regeneration des Partikelfilters (16) mehrfach zwischen der Heizphase und der Regenerationsphase alternierend gewechselt wird.

8. Verfahren nach einem der Ansprüche 1 bis 7, **dadurch gekennzeichnet, dass** die Temperatur des Partikelfilters während der Regeneration in einem Temperaturfenster zwischen der Regenerationstemperatur (T_{R}) und einer oberen Schwellentemperatur (T_{SO}) gehalten wird.

9. Verfahren nach Anspruch 8, **dadurch gekennzeichnet, dass** das Temperaturfenster in einem Bereich von 600°C bis 750°C liegt.

10. Verfahren nach einem der Ansprüche 1 bis 9, **dadurch gekennzeichnet, dass** die Sekundärluftmenge derart eingeregelt wird, dass sich während der Regeneration des Partikelfilters (16) ein Mischungsluftverhältnis (λ_{M}) stromauf des Partikelfilters (16) von 1,05 bis 1,4, vorzugsweise von 1,1 bis 1,25, einstellt.

11. Verfahren nach einem der Ansprüche 1 bis 10, **dadurch gekennzeichnet, dass** die Sekundärluftmenge derart eingeregelt wird, dass sich stromab des Partikelfilters (16) ein stöchiometrisches Abgas einstellt.

12. Verfahren nach einem der Ansprüche 1 bis 11, **dadurch gekennzeichnet, dass** die Heizphase erst dann beendet wird, wenn der Partikelfilter (16) eine Temperatur erreicht, welche mindestens 30°C, vorzugsweise mindestens 50°C oberhalb der Regenerationstemperatur (T_{R}) des Partikelfilters (16) liegt.

13. Verfahren nach einem der Ansprüche 1 bis 12, **dadurch gekennzeichnet, dass** die Sekundärluft aus einem Ansaugkanal (26) des Verbrennungsmotors (10) stromab eines Verdichters (28) entnommen und in den Abgaskanal (12) eingeleitet wird.

14. Steuergerät (30) für einen Verbrennungsmotor (10), welches einen computerlesbaren Programmalgorithmus zur Steuerung des Verfahrens nach einem der Ansprüche 1 bis 13 aufweist.

15. Vorrichtung zur Abgasnachbehandlung eines Verbrennungsmotors (10) mit einem Abgaskanal (12), einem im Abgaskanal angeordneten Drei-Wege-Katalysator (14) sowie einem im Abgaskanal (12) stromabwärts des Drei-Wege-Katalysators (14) angeordneten Partikelfilter (16) sowie mit einer Sekundärluftversorgung (18), wobei zwischen dem Drei-Wege-Katalysator (14) und dem Partikelfilter (16) eine Einleitstelle (20) für die Sekundärluft aus der Sekundärluftquelle (18) vorgesehen ist, sowie mit einer ersten, stromaufwärts des Drei-Wege-Katalysators (14) angeordneten Lambdasonde (22) und einer zweiten, stromabwärts der Einleitstelle (20) und stromaufwärts des Partikelfilters (16) angeordneten Lambdasonde (24), wobei die Vorrichtung eingerichtet ist, um ein Verfahren nach einem der Ansprüche 1 bis 13 durchzuführen.

## Claims

1. Method for the exhaust-gas aftertreatment of an internal combustion engine (10) having an exhaust-gas duct (12) and a three-way catalytic converter (14) arranged in the exhaust-gas duct (12), a particle filter (16) arranged downstream of the three-way catalytic converter (14), and a secondary air supply (18), which method comprises the following steps:
∘ operating the internal combustion engine (10) with a stoichiometric combustion air ratio (λ_{E} = 1), wherein the soot particles formed during the combustion are retained in the particle filter (16),
∘ determining a loading state of the particle filter (16),
∘ initiating a regeneration of the particle filter (16) if the need for a regeneration of the particle filter (16) is identified in the determination of the loading state,
∘ raising the exhaust-gas temperature (T_{EG}) in a heating phase by means of operation of the internal combustion engine (10) with a substoichiometric, rich combustion air ratio (λ_{E} < 1) and simultaneous introduction of secondary air into the exhaust-gas duct (12) upstream of the particle filter (16), wherein the unburned fuel components are exothermically converted in the exhaust-gas duct (12) or on the particle filter (16) with the secondary air until a regeneration temperature (T_{R}) is attained;
∘ regenerating the particle filter (16), wherein the internal combustion engine (10) is operated with a stoichiometric combustion air ratio (λ_{E} = 1) and secondary air is introduced into the exhaust-gas duct (12), such that superstoichiometric exhaust gas (λ_{M} > 1) is formed downstream of the introduction of secondary air, wherein
∘ the quantity of secondary air introduced into the exhaust-gas channel (12) is controlled in closed-loop fashion by means of a lambda probe (24) downstream of an introduction point (20) for the secondary air and upstream of the particle filter (16).

2. Method according to Claim 1, **characterized in that**, in the heating phase, by means of the introduction of secondary air, a stoichiometric mixture air ratio (A_{M} = 1) is realized in the exhaust-gas duct (12) downstream of the three-way catalytic converter (14) and upstream of the particle filter (16).

3. Method according to Claim 1 or 2, **characterized in that** a temperature (T_{PF}) of the particle filter (16) is determined and, in the regeneration phase, the temperature (T_{PF}) is kept above the regeneration temperature (T_{R}) of the particle filter (16).

4. Method according to any of Claims 1 to 3, **characterized in that**, in the event of an upper threshold temperature (T_{SO}) being reached, the introduction of secondary air is stopped.

5. Method according to Claim 3 or 4, **characterized in that** the secondary air quantity metered into the exhaust-gas duct (12) is increased or reduced in a manner dependent on a temperature change (ΔT_{PF}) of the particle filter (16).

6. Method according to any of Claims 1 to 5, **characterized in that** the secondary air quantity metered into the exhaust-gas duct (12) is increased with progressive regeneration of the particle filter (16).

7. Method according to any of Claims 1 to 6, **characterized in that**, for the regeneration of the particle filter (16), repeated alternating switching between the heating phase and the regeneration phase is performed.

8. Method according to any of Claims 1 to 7, **characterized in that** the temperature of the particle filter is, during the regeneration, kept in a temperature window between the regeneration temperature (T_{R}) and an upper threshold temperature (T_{SO}).

9. Method according to Claim 8, **characterized in that** the temperature window lies in a range from 600°C to 750°C.

10. Method according to any of Claims 1 to 9, **characterized in that** the secondary air quantity is adjusted by closed-loop control such that, during the regeneration of the particle filter (16), a mixture air ratio (λ_{M}) upstream of the particle filter (16) of 1.05 to 1.4, preferably of 1.1 to 1.25, is realized.

11. Method according to any of Claims 1 to 10, **characterized in that** the secondary air quantity is adjusted by closed-loop control such that stoichiometric exhaust gas is realized downstream of the particle filter (16) .

12. Method according to any of Claims 1 to 11, **characterized in that** the heating phase is ended only when the particle filter (16) reaches a temperature which lies at least 30°C, preferably at least 50°C, above the regeneration temperature (T_{R}) of the particle filter (16) .

13. Method according to any of Claims 1 to 12, **characterized in that** the secondary air is extracted from an intake duct (26) of the internal combustion engine (10) downstream of a compressor (28) and introduced into the exhaust-gas duct (12).

14. Control unit (30) for an internal combustion engine (10), which control unit has a computer-readable program algorithm for controlling the method according to any of Claims 1 to 13.

15. Device for the exhaust-gas aftertreatment of an internal combustion engine (10) having an exhaust-gas duct (12), having a three-way catalytic converter (14) arranged in the exhaust-gas duct and having a particle filter (16) arranged in the exhaust-gas duct (12) downstream of the three-way catalytic converter (14) and having a secondary air supply (18), wherein an introduction point (20) for the secondary air from the secondary air source (18) is provided between the three-way catalytic converter (14) and the particle filter (16), and having a first lambda probe (22), which is arranged upstream of the three-way catalytic converter (14), and a second lambda probe (24), which is arranged downstream of the introduction point (20) and upstream of the particle filter (16), wherein the device is configured to carry out a method according to any of Claims 1 to 13.

## Revendications

1. Procédé de post-traitement des gaz d'échappement d'un moteur à combustion interne (10) comprenant un canal de gaz d'échappement (12) ainsi qu'un catalyseur à trois voies (14) disposé dans le canal de gaz d'échappement (12), un filtre à particules (16) disposé en aval du catalyseur à trois voies (14) ainsi qu'une alimentation en air secondaire (18), lequel comprend les étapes suivantes :
∘ fonctionnement du moteur à combustion interne (10) avec un rapport d'air de combustion stœchiométrique (λ_{E} = 1), les particules de suie produites lors de la combustion étant retenues dans le filtre à particules (16),
∘ détermination d'un état de charge du filtre à particules (16),
∘ initiation d'une régénération du filtre à particules (16) si la nécessité d'une régénération du filtre à particules (16) est reconnue lors de la détermination de l'état de charge,
∘ élévation de la température des gaz d'échappement (T_{EG}) dans une phase de chauffe par un fonctionnement du moteur à combustion interne (10) avec un rapport d'air de combustion sous-stœchiométrique gras (λ_{E} < 1) et introduction simultanée d'air secondaire dans le canal de gaz d'échappement (12) en amont du filtre à particules (16), les composantes non consumées du carburant étant converties par effet exotherme dans le canal de gaz d'échappement (12) ou dans le filtre à particules (16) jusqu'à ce qu'une température de régénération (T_{R}) soit atteinte ;
∘ régénération du filtre à particules (16), le moteur à combustion interne (10) fonctionnant avec un rapport d'air de combustion stœchiométrique (λ_{E} = 1) et de l'air secondaire étant introduit dans le canal de gaz d'échappement (12), de sorte que des gaz d'échappement sur-stœchiométriques (λ_{M} > 1) s'établissent en aval de l'introduction de l'air secondaire,
∘ la quantité d'air secondaire introduite dans le canal de gaz d'échappement (12) étant régulée par le biais d'une sonde Lambda (24) en aval d'un point d'introduction (20) pour l'air secondaire et en amont du filtre à particules (16).

2. Procédé selon la revendication 1, **caractérisé en ce que** dans la phase de chauffe, un rapport d'air de mélange stœchiométrique (λ_{M} = 1) est réglé en aval du catalyseur à trois voies (14) et en amont du filtre à particules (16) du fait de l'apport d'air secondaire.

3. Procédé selon la revendication 1 ou 2, **caractérisé en ce qu'**une température (T_{PF}) du filtre à particules (16) est déterminée et la température (T_{PF}) est maintenue au-dessus de la température de régénération (T_{R}) du filtre à particules (16) dans la phase de régénération.

4. Procédé selon l'une des revendications 1 à 3, **caractérisé en ce que** l'apport d'air secondaire est arrêté lorsqu'une température de seuil supérieure (T_{SO}) est atteinte.

5. Procédé selon la revendication 3 ou 4, **caractérisé en ce que** la quantité d'air secondaire dosée dans le canal de gaz d'échappement (12) est augmentée ou réduite en fonction d'une variation de température (ΔT_{PF}) du filtre à particules (16).

6. Procédé selon l'une des revendications 1 à 5, **caractérisé en ce que** la quantité d'air secondaire dosée dans le canal de gaz d'échappement (12) est augmentée à mesure que la régénération du filtre à particules (16) augmente.

7. Procédé selon l'une des revendications 1 à 6, **caractérisé en ce que** plusieurs changements entre la phase de chauffe et la phase de régénération sont effectués en alternance en vue de la régénération du filtre à particules (16).

8. Procédé selon l'une des revendications 1 à 7, **caractérisé en ce que** pendant la régénération, la température du filtre à particules est maintenue dans une fenêtre de températures entre la température de régénération (T_{R}) et une température de seuil supérieure (T_{SO}).

9. Procédé selon la revendication 8, **caractérisé en ce que** la fenêtre de températures est comprise dans une plage de 600 °C à 750 °C.

10. Procédé selon l'une des revendications 1 à 9, **caractérisé en ce que** la quantité d'air secondaire est régulée de telle sorte qu'un rapport d'air de mélange (λ_{M}) de 1,05 à 1,4, de préférence de 1,1 à 1,25, s'établit en amont du filtre à particules (16) pendant la régénération du filtre à particules (16).

11. Procédé selon l'une des revendications 1 à 10, **caractérisé en ce que** la quantité d'air secondaire est régulée de telle sorte que des gaz d'échappement stœchiométriques s'établissent en aval du filtre à particules (16).

12. Procédé selon l'une des revendications 1 à 11, **caractérisé en ce que** la phase de chauffe ne prend fin que lorsque le filtre à particules (16) atteint une température qui est supérieure à la température de régénération (T_{R}) du filtre à particules (16) d'au moins 30 °C, de préférence d'au moins 50 °C.

13. Procédé selon l'une des revendications 1 à 12, **caractérisé en ce que** l'air secondaire est prélevé depuis un canal d'aspiration (26) du moteur à combustion interne (10) en aval d'un compresseur (28) et introduit dans le canal de gaz d'échappement (12).

14. Contrôleur (30) pour un moteur à combustion interne (10), lequel possède un algorithme de programme lisible par ordinateur destiné à commander le procédé selon l'une des revendications 1 à 13.

15. Dispositif de post-traitement des gaz d'échappement d'un moteur à combustion interne (10) comprenant un canal de gaz d'échappement (12), un catalyseur à trois voies (14) disposé dans le canal de gaz d'échappement ainsi qu'un filtre à particules (16) disposé dans le canal de gaz d'échappement (12) en aval du catalyseur à trois voies (14) ainsi qu'une alimentation en air secondaire (18), un point d'introduction (20) pour l'air secondaire depuis la source d'air secondaire (18) se trouvant entre le catalyseur à trois voies (14) et le filtre à particules (16), ainsi qu'une première sonde Lambda (22) disposée en amont du catalyseur à trois voies (14) et une deuxième sonde Lambda (24) disposée an aval du point d'introduction (20) et en amont du filtre à particules (16), le dispositif étant conçu pour mettre en œuvre un procédé selon l'une des revendications 1 à 13.
